(19) Europäisches Patentamt
European Patent Office
Office européen des brevets

(11) EP 4 769 249 A1

(12) EUROPEAN PATENT APPLICATION
published in accordance with Art. 153(4) EPC

(43) Date of publication:
01.07.2026 Bulletin 2026/27

(21) Application number: 24896994.1

(22) Date of filing: 09.08.2024

(51) International Patent Classification (IPC):
G06N 20/00 (2019.01)    G05B 19/418 (2006.01)

(52) Cooperative Patent Classification (CPC):
G05B 19/418; G06N 20/00

(86) International application number:
PCT/JP2024/028755

(87) International publication number:
WO 2025/115302 (05.06.2025 Gazette 2025/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.11.2023 JP 2023200165

(71) Applicant: JFE Steel Corporation
Tokyo 100-0011 (JP)

(72) Inventor: KIMURA Yuki
Tokyo 100-0011 (JP)

(74) Representative: Haseltine Lake Kempner LLP
Bürkleinstrasse 10
80538 München (DE)

(54) QUALITY PREDICTION MODEL GENERATION METHOD, METAL MATERIAL QUALITY PREDICTION METHOD, METAL MATERIAL MANUFACTURING METHOD, METAL MATERIAL MANUFACTURING CONDITION PRESENTATION METHOD, QUALITY PREDICTION MODEL GENERATION DEVICE, METAL MATERIAL QUALITY PREDICTION DEVICE, METAL MATERIAL MANUFACTURING CONDITION PRESENTATION DEVICE, AND METAL MATERIAL MANUFACTURING SYSTEM

(57) A method of generating a quality prediction model includes an acquisition step (S1) of acquiring an explanatory variable selected from manufacturing conditions of each process and an objective variable that is a state of quality defects in the manufactured metal material, a storage step (S3) of storing the explanatory variable and the objective variable in association with each other as training data, calculation steps (S4 to S6) of dividing the training data into groups and testing whether a significant difference exists in the state of quality defects, a search step (S7) of searching for a most significant grouping, and a generation step (S8) of generating the quality prediction model by machine learning using a group according to the most significant grouping found.

FIG. 2

```
                    Start
                      │
  ┌───────────────────────────────────────────┐
  │  Acquire manufacturing conditions, quality data │──S1
  └───────────────────────────────────────────┘
                      │
  ┌───────────────────────────────────────────┐
  │        Eliminate multicollinearity         │──S2
  └───────────────────────────────────────────┘
                      │
  ┌───────────────────────────────────────────┐
  │           Store as training data           │──S3
  └───────────────────────────────────────────┘
                      │
         No     ┌──────────────────────────────┐ S4
    ┌───────────┤ Are the explanatory variables │
    │           │     categorical variables?     │
    │           └──────────────────────────────┘
    │                   │ Yes
    │           ┌───────────────────────────────┐
    │           │     Perform numerical conversion │──S5
    │           └───────────────────────────────┘
    │                   │
    │           ┌───────────────────────────────┐
    │           │  Divide training data into groups │──S6
    │           │  and perform a significance test  │
    │           └───────────────────────────────┘
    │                   │
    │           ┌───────────────────────────────┐
    │           │ Search for the most significant grouping │──S7
    │           └───────────────────────────────┘
    │                   │
    │           ┌───────────────────────────────┐
    │           │ Generate a quality prediction model for the │──S8
    │           │ groups according to the grouping that was found │
    │           └───────────────────────────────┘
    │                   │
    │           ┌───────────────────────────────┐
    │           │ Use the generated quality prediction model to predict │──S9
    │           │ presence/absence of quality defects in a metal material │
    │           └───────────────────────────────┘
    │                   │
    │   Yes     ┌───────────────────────────────┐ S10
    └───────────┤ Regenerate the quality prediction model? │
                └───────────────────────────────┘
                        │ No
                ┌───────────────────────────────┐
                │ Present manufacturing conditions for the metal material │──S11
                └───────────────────────────────┘
                        │
                ┌───────────────────────────────┐
                │      Manufacture the metal material      │──S12
                └───────────────────────────────┘
                        │
                      End
```

**Description**

TECHNICAL FIELD

The present disclosure relates to a method of generating a quality prediction model, a method of predicting quality for a metal material, a method of manufacturing a metal material, a method of presenting manufacturing conditions for a metal material, a quality prediction model generation apparatus, a quality prediction apparatus for a metal material, a manufacturing condition presentation apparatus for a metal material, and a manufacturing system for a metal material.

BACKGROUND

An example of a known method of predicting quality for any required conditions is to calculate the distance between a plurality of past observation conditions stored in a performance database and the required conditions that are desired and then predict quality using the calculated distance. For example, according to Patent Literature (PTL) 1, a method is known in which weights for observed data (performance data) are calculated from a calculated distance, a function is created from the calculated weights to fit the vicinity of the required conditions, and the created function is used to predict quality for the required conditions.

CITATION LIST

Patent Literature

PTL 1: JP 7207547 B2

SUMMARY

(Technical Problem)

The method of predicting quality of PTL 1 associates the manufacturing conditions of each process with the quality of the metal material manufactured under these manufacturing conditions for each specified range to accumulate performance data. The method then generates a quality prediction model that predicts the quality of the metal material for each specified range. The predetermined range is determined taking into consideration, for example, the cutting position of the metal material. Although the method of predicting quality of PTL 1 can predict quality for any manufacturing conditions with high accuracy, demand exists for further improvement in prediction accuracy. For example, by objectively classifying data to correspond to changes in the quality of metal materials and generating a quality prediction model for each classification, further improvements in prediction accuracy are expected.
In view of the above, it is an aim of the present disclosure to provide a method of generating a quality prediction model, a method of predicting quality for a metal material, a method of manufacturing a metal material, a quality prediction model generation apparatus, and a quality prediction apparatus for a metal material that can highly accurately predict the quality of a metal material.

(Solution to Problem)

(1) A method of generating a quality prediction model according to an embodiment of the present disclosure is a method of generating a quality prediction model for a metal material manufactured through one or more processes, the method comprising:

acquiring an explanatory variable selected from manufacturing conditions of each process and an objective variable that is a state of quality defects in the manufactured metal material;
storing the explanatory variable and the objective variable in association with each other as training data;
calculating by dividing the training data into groups and testing whether a significant difference exists in the state of quality defects;
searching for a most significant grouping; and
generating the quality prediction model by machine learning using a group according to the most significant grouping found.

(2) As an embodiment of the present disclosure, in (1),
the explanatory variable is acquired as a numerical variable or a categorical variable.

(3) As an embodiment of the present disclosure, in (2),
when the explanatory variable is acquired as a categorical variable, the calculating includes performing a numerical conversion to classify the categorical variable by assigning different binary numerical values, and calculating an index evaluating the significant difference based on the assigned numerical values and the state of quality defects.

(4) As an embodiment of the present disclosure, in (3),
the calculating includes calculating the index for each of a plurality of groupings.

(5) As an embodiment of the present disclosure, in any one of (1) to (4),
after the searching, the calculating includes further grouping one group among groups according to the most significant grouping found and testing the one group.

(6) As an embodiment of the present disclosure, in any one of (1) to (5),
techniques for the machine learning include at least linear regression, local regression, principal component regression, PLS regression, neural networks, regression trees, random forests, LightGBM, and XGBoost.

(7) As an embodiment of the present disclosure, in any one of (1) to (6),
the quality prediction model is regenerated when a prediction accuracy of the quality prediction model falls outside a predetermined range, or at predetermined intervals.

(8) A method of predicting quality of a metal material according to an embodiment of the present disclosure includes:
using a quality prediction model generated by the method of generating a quality prediction model according to any one of (1) to (7) to predict a state of quality defects in the metal material.

(9) A method of manufacturing a metal material according to an embodiment of the present disclosure includes:

    using the method of predicting quality of a metal material according to (8) to predict a state of quality defects of the metal material; and
    changing at least a portion of the manufacturing conditions when a quality defect in the metal material is predicted to exist.

(10) A method of presenting manufacturing conditions for a metal material according to an embodiment of the present disclosure includes:
using the method of predicting quality of a metal material according to (8) to predict a state of quality defects of the metal material, and when a quality defect of the metal material is predicted, searching for and presenting a change to at least a portion of the manufacturing conditions that will eliminate the quality defect.

(11) A method of manufacturing a metal material according to an embodiment of the present disclosure includes:
manufacturing a metal material based on the change to the manufacturing conditions presented by the method of presenting manufacturing conditions for a metal material according to (10).

(12) A quality prediction model generation apparatus according to an embodiment of the present disclosure is
a quality prediction model generation apparatus for generating a quality prediction model for a metal material manufactured through one or more processes, comprising:

    an acquisition unit configured to acquire an explanatory variable selected from manufacturing conditions of each process and an objective variable that is a state of quality defects in the manufactured metal material;
    a storage unit configured to store the explanatory variable and the objective variable in association with each other as training data;
    a calculation unit configured to divide the training data into groups and test whether a significant difference exists in the state of quality defects;
    a search unit configured to search for a most significant grouping; and
    a generation unit configured to generate the quality prediction model by machine learning using a group according to the most significant grouping found.

(13) A quality prediction apparatus for a metal material according to an embodiment of the present disclosure is configured to
use a quality prediction model generated by the quality prediction model generation apparatus according to (12) to predict a state of quality defects in the metal material.

(14) A manufacturing condition presentation apparatus for a metal material according to an embodiment of the present disclosure is configured to
present a change to at least a portion of manufacturing conditions of a metal material based on presence or absence of quality defects in the metal material as predicted by the quality prediction apparatus for a metal material according to (13).

(15) A manufacturing system for a metal material according to an embodiment of the present disclosure is configured to

control a manufacturing apparatus for each process of manufacturing a metal material in accordance with the change to manufacturing conditions as output from an output unit of the manufacturing condition presentation apparatus for a metal material according to (14).

(Advantageous Effect)

According to the present disclosure, a method of generating a quality prediction model, a method of predicting quality for a metal material, a method of manufacturing metal material, a quality prediction model generation apparatus, and a quality prediction apparatus for a metal material that can highly accurately predict the quality of a metal material can be provided.

BRIEF DESCRIPTION OF THE DRAWINGS

In the accompanying drawings:

FIG. 1 is a block diagram illustrating a configuration example of a quality prediction model generation apparatus according to an embodiment of the present disclosure;
FIG. 2 is a flowchart illustrating processing of a method of generating a quality prediction model according to an embodiment of the present disclosure;
FIG. 3 is a diagram for explaining grouping;
FIG. 4 is a diagram illustrating combinations of two groups and the presence/absence of quality defects; and
FIG. 5 is a diagram illustrating a slab casting process.

DETAILED DESCRIPTION

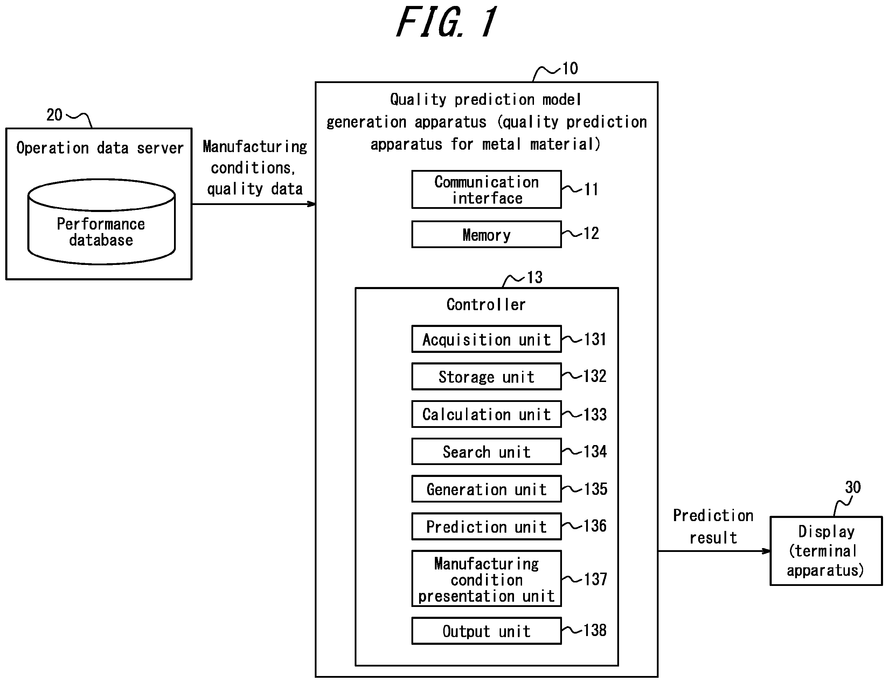

Hereinafter, with reference to the drawings, a method of generating a quality prediction model, a method of predicting quality for a metal material, a method of manufacturing metal material, a method of presenting manufacturing conditions for a metal material, a quality prediction model generation apparatus 10 (see FIG. 1), a quality prediction apparatus for a metal material, a manufacturing condition presentation apparatus for a metal material, and a manufacturing system for a metal material will be described. As an overview, the method of generating a quality prediction model and the quality prediction model generation apparatus 10 according to the present embodiment acquire manufacturing conditions and quality data for each process for manufacturing a metal material, test the acquired data, and divide the data into groups with significant differences in quality. The method of generating a quality prediction model and the quality prediction model generation apparatus 10 then generate a quality prediction model that predicts quality for each group. The method of predicting quality for a metal material according to the present embodiment predicts the state of quality defects in the metal material using a quality prediction model generated by the method of generating a quality prediction model or the quality prediction model generation apparatus 10 according to the present embodiment. The state of quality defects is classified into a first state and a second state. For example, the first state may correspond to "present", "a predetermined number or more", "distributed over a predetermined range or more", or the like, whereas the second state may correspond to "absent", "less than a predetermined number", "distributed over less than a predetermined range", or the like. In the following explanation, the first state is described as "present" and the second state as "absent," but the "presence/absence" of quality defects is an example of the "state" of quality defects, and "presence/absence" can be replaced with "state". The method of manufacturing a metal material according to the present embodiment is a method of manufacturing a metal material that predicts the presence/absence of a quality defect in metal material using the method of predicting the quality of a metal material according to the present embodiment, and when a quality defect in the metal material is predicted, changes at least a portion of the manufacturing conditions. The method of predicting quality for a metal material according to the present embodiment predicts the presence/absence of quality defects in the metal material using a quality prediction model generated by the method of generating a quality prediction model or the quality prediction model generation apparatus 10 according to the present embodiment. Furthermore, the method of presenting manufacturing conditions for a metal material according to the present embodiment presents a change to at least a portion of manufacturing conditions for a metal material based on the results of the presence/absence of quality defects in the metal material as predicted by the method of predicting quality or quality prediction apparatus for a metal material according to the present embodiment.

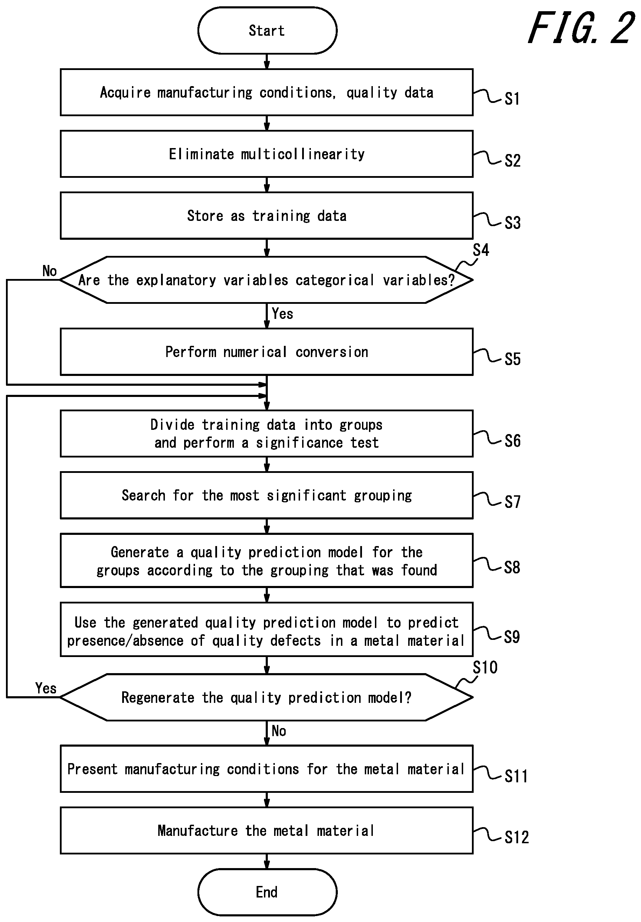

FIG. 1 is a block diagram illustrating an example of the configuration of a quality prediction model generation apparatus 10 according to the present embodiment. The quality prediction model generation apparatus 10 is used in a manufacturing process for manufacturing a metal material. The metal material may, for example, be steel products and may include semi-finished products, such as slabs, and products such as steel sheets manufactured by rolling slabs. The quality prediction model generation apparatus 10 generates a quality prediction model for a metal material that is manufactured through one or more processes. The quality prediction model generation apparatus 10 executes a method of generating a quality prediction model (see FIG. 2). Furthermore, in the example of FIG. 1, the quality prediction model generation apparatus 10 also functions as a quality prediction apparatus for a metal material that uses the generated quality prediction model to predict the presence/absence of quality defects in a metal material. The quality prediction apparatus for a metal material executes a method of predicting quality of a metal material (see FIG. 2). Here, the quality prediction model generation apparatus 10 may be provided with only the function of generating a quality prediction model. In this case, the quality prediction apparatus for a metal material may be configured as an apparatus that is separate from the quality prediction model generation apparatus 10 and can acquire a quality prediction model from the quality prediction model generation apparatus 10. Furthermore, in the example of FIG. 1, the quality prediction model generation apparatus 10 also functions as a manufacturing condition presentation apparatus for a metal material that presents a change to at least a portion of manufacturing conditions for a metal material based on the presence/absence of quality defects in the metal material as predicted by the method of predicting a metal material. The manufacturing condition presentation apparatus for a metal material executes a method of presenting manufacturing conditions for a metal material. The manufacturing condition presentation apparatus may be configured as an apparatus separate from the quality prediction model generation apparatus 10.

As illustrated in FIG. 1, the quality prediction model generation apparatus 10 includes a communication interface 11, a memory 12, and a controller 13. The controller 13 includes an acquisition unit 131, a storage unit 132, a calculation unit 133, a search unit 134, a generation unit 135, a prediction unit 136, a manufacturing condition presentation unit 137, and an output unit 138. The quality prediction model generation apparatus 10 may be realized as a hardware configuration by a general-purpose computer (information processing apparatus) such as a personal computer or a workstation. The computer includes a processor such as a central processing unit (CPU). Furthermore, the computer includes, as main components, memories such as random access memory (RAM) and read only memory (ROM). The components of the quality prediction model generation apparatus 10 are described in detail later.

The quality prediction model generation apparatus 10 acquires quality data and operation data from an operation data server 20. The operation data includes the manufacturing conditions for each process for manufacturing a metal material. In the example of FIG. 1, the quality prediction model generation apparatus 10 acquires quality data and operation data accumulated in a performance database provided in the operation data server 20. The operation data server 20 is capable of communicating with the quality prediction model generation apparatus 10 via a network and may be implemented by, for example, a computer that manages the manufacturing process. The network is, for example, the Internet. Furthermore, in the present embodiment, the display 30 displays the prediction result output from the quality prediction apparatus for a metal material (integrated with the quality prediction model generation apparatus 10 in the example of FIG. 1).

Here, the manufacturing conditions accumulated in the performance database may include at least one of the components of the metal material, the temperature, the pressure, the sheet thickness, and the strip speed in each process. Furthermore, the quality data accumulated in the performance database may include at least one of material properties such as tensile strength, the presence/absence of defects for surface defects in the material, the presence/absence of defects for internal defects in the material, the number of defects, the locations of the defects, and the like. The manufacturing conditions and quality data are, for example, obtained as operation performance data, target values, analysis values, quality judgment results, and the like from sensors, manufacturing apparatuses, control devices, quality control apparatuses, and the like installed in a factory or the like. For example, the presence/absence of internal defects in a steel sheet (an example of a metal material) may be obtained as quality data using an ultrasonic flaw detector (an example of a sensor and quality control apparatus). The performance database is a database in which data on the quality of manufactured metal materials is associated with the manufacturing conditions of each corresponding process, operation performance data, various analytical values, and the like.

Here, the quality prediction model generation apparatus 10 is a computer separate from the operation data server 20 in the example of FIG. 1 but may be configured as the same computer as the operation data server 20. The display 30 may be an apparatus that allows an operator or the like working in the manufacturing process to obtain information. The display 30 may be realized by a display of a terminal device such as a smartphone or a tablet. A method of manufacturing a metal material may be performed to change at least a portion of the manufacturing conditions, based on an instruction from an operator, when a quality defect in the metal material is predicted to exist. The display 30 may, for example, be a display device such as a liquid crystal display or an organic electro-luminescence panel.

The components of the quality prediction model generation apparatus 10 are described in detail below. The communication interface 11 includes one or more communication modules that connect to the network. The communication interface 11 may include a communication module compatible with mobile communication standards such as 4G (4th Generation) and 5G (5th Generation). The communication interface 11 may include a communication module compatible with a wired or wireless LAN standard, for example.

The memory 12 includes one or more memories. The memories can be any memory, including but not limited to a semiconductor memory, a magnetic memory, or an optical memory. The memory 12 may, for example, be built into the quality prediction model generation apparatus 10 and be accessed from the outside by the quality prediction model generation apparatus 10 via any interface.

The memory 12 stores various data used in various calculations executed by the controller 13. Furthermore, the memory 12 may store results and intermediate data of various calculations executed by the controller 13. In the present embodiment, the memory 12 stores the training data and the generated model.

The controller 13 is at least one processor. The processor can, for example, be a general-purpose processor or a dedicated processor specialized for particular processing, but the processor is not limited to these examples and may be any processor. The controller 13 controls overall operation of the quality prediction model generation apparatus 10.

Here, the quality prediction model generation apparatus 10 may have the following software configuration. One or more programs used to control the operation of the quality prediction model generation apparatus 10 are stored in the memory 12. The program stored in the memory 12, when read by the processor of the controller 13, causes the controller 13 to function as the acquisition unit 131, the storage unit 132, the calculation unit 133, the search unit 134, the generation unit 135, and the prediction unit 136.

The acquisition unit 131 acquires manufacturing conditions and quality data from the performance database. Here, the performance database stores a large amount of quality data, including manufacturing conditions for each process and measurements of the presence/absence of quality defects in the metal material manufactured under those manufacturing conditions, as time-series data, for example. The acquisition unit 131 may selectively acquire explanatory variables and objective variables that can be used as training data for machine learning, described below, from the performance database. In the present embodiment, the acquisition unit 131 acquires explanatory variables selected from the manufacturing conditions of each process and an objective variable that is a state of quality defects in the manufactured metal material.

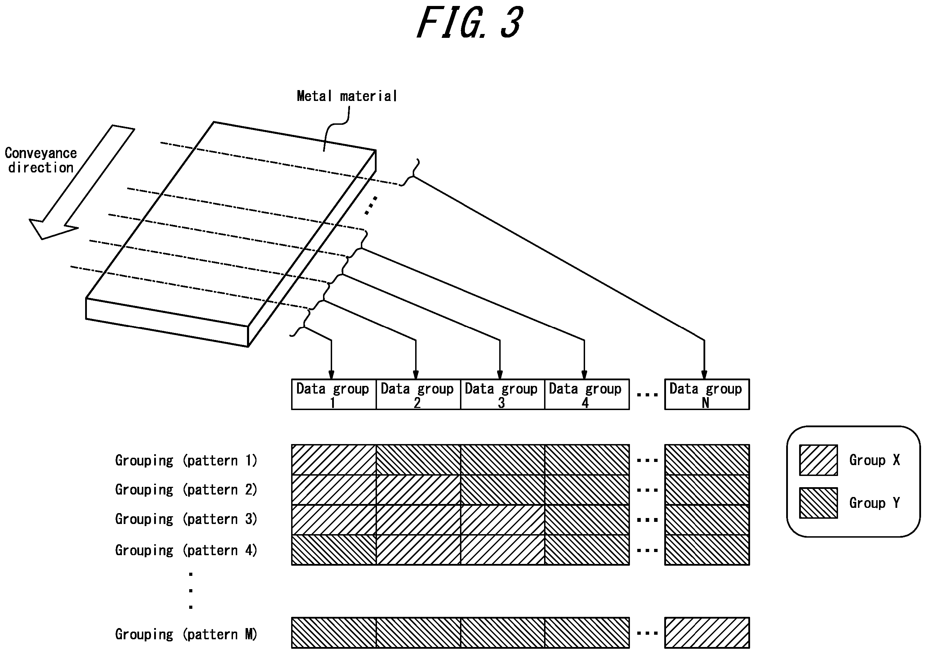

The storage unit 132 stores the explanatory variables, which are data acquired by the acquisition unit 131, and the objective variables in association with each other as training data. In other words, the storage unit 132 matches (links) the manufacturing conditions of each process acquired as explanatory variables with quality data including measurements of the presence/absence of quality defects in the metal material manufactured under those manufacturing conditions, and uses the result as training data. The training data may be stored in the memory 12, for example. Here, if the manufacturing conditions for each process are acquired over a long period of time or at a high frequency to yield a large amount of data, the storage unit 132 may perform thinning or convert the data into a representative value, such as the average or median, to yield an appropriate data amount before storing the training data. Furthermore, as illustrated in FIG. 3, the storage unit 132 may associate "manufacturing conditions for each process and the presence/absence of quality defects (data group)" for each predetermined range of metal material. In the example of FIG. 3, the training data is associated with each predetermined range from the beginning in the metal material conveyance direction and is divided into data group 1, data group 2, data group 3, data group 4, ..., data group N. Here, N is an integer equal to or greater than 2. Furthermore, the predetermined range may, for example, be determined based on the cutting position when the metal material is cut during manufacturing, but the predetermined range is not limited to this determination method.

The calculation unit 133 divides the training data into groups and performs a test (significance test) to determine whether a significant difference exists in the presence/absence of quality defects. The calculation unit 133 divides the above data groups 1 to N into group X and group Y, for example, as illustrated in patterns 1 to M in FIG. 3. Here, M is an integer equal to or greater than 2. The calculation unit 133 forms a plurality of groupings and performs a significance test for each grouping. The calculation unit 133 may perform grouping comprehensively for all combinations or may perform grouping for only some combinations. For example, a constraint such as an upper limit on the calculation time may be given, and the calculation unit 133 may group the combinations that can be calculated within the constraint. Furthermore, a priority order for grouping may be determined in advance based on manufacturing knowledge or the like.

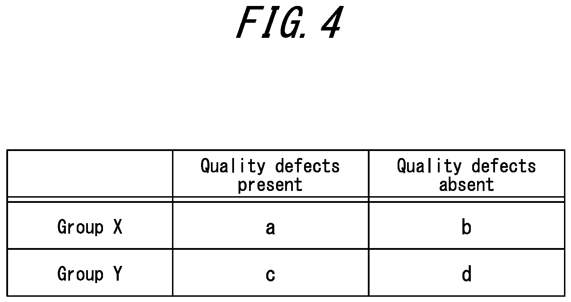

In the present embodiment, the calculation unit 133 uses Fisher's exact test. However, the method of significance testing is not limited. Furthermore, in the present embodiment, the calculation unit 133 uses a P value as an index for evaluating a significant difference. The P value indicates the probability of a combination resulting in a difference greater than or equal to the observed difference among all possible combinations. Therefore, the smaller the P value, the higher the significance (the higher the probability that a significant difference exists). As illustrated in FIG. 4, it is assumed that the numbers corresponding to the respective combinations of two groups and the presence/absence of quality defects are a, b, c, and d. In this case, the P value is calculated using the following formula, where n is the total number of pieces of training data.

[Math. 1]

$$P = \frac{(a+b)!\,(c+d)!\,(a+c)!\,(b+d)!}{n!\,a!\,b!\,c!\,d!}$$

Here, the grouping is based on an explanatory variable. Furthermore, the explanatory variable is acquired as a numerical variable or categorical variable. For example, when the explanatory variable used for grouping is acquired as a numerical variable, the calculation unit 133 may classify a group as group X if the explanatory variable is equal to or greater than a threshold and as group Y if the explanatory variable is less than the threshold.

For example, when the explanatory variables used for grouping are acquired as categorical variables, the calculation unit 133 may perform a numerical conversion to classify the categorical variables by assigning them different binary numerical values. The different binary numerical values may, for example, be 0 or 1. In the present embodiment, 0 or 1 are used. Furthermore, one-hot encoding may be used as the numerical conversion, but this example is not limiting. The calculation unit 133 may then calculate an index (P value) for evaluating a significant difference based on the assigned 0 or 1 and the presence/absence of quality defects. That is, the calculation unit 133 may classify the explanatory variable after numerical conversion as group X if it is 1 (i.e., if it is a certain category), and as group Y if it is 0 (i.e., if it is not a certain category).

Here, the explanatory variables are selected from the manufacturing conditions of each process. Furthermore, the manufacturing conditions include many variables such as the composition of the metal material and the temperature in various processes. Therefore, the selection of explanatory variables used for grouping varies. For example, if n explanatory variables are used for grouping, P values may be calculated for all $2^n$ patterns or for a portion thereof. Furthermore, candidates for explanatory variables to be used for grouping may be determined in advance based on manufacturing knowledge.

The search unit 134 searches for the most significant grouping. In the present embodiment, the search unit 134 identifies the grouping with the lowest P value. In the example of FIG. 3, the calculation unit 133 calculates a P value for each of patterns 1 to M, and the search unit 134 identifies the pattern with the lowest P value (for example, pattern 2) as the most significant grouping. In this example, the search unit 134 determines that the most significant difference exists between group X, which includes data groups 1 and 2, and group Y, which includes data groups 3 to N.

Here, the calculation unit 133 and the search unit 134 may perform grouping in multiple stages, starting from the group with the lowest P value. In other words, after the search unit 134 has searched for the most significant grouping, the calculation unit 133 may further group one of the groups according to that grouping and perform a significance test (calculate the P value). In the example of FIG. 3, after the search unit 134 identifies pattern 2 as the most significant grouping, the calculation unit 133 may perform further grouping and calculation of the P value for group Y, which includes data groups 3 to N. The search unit 134 then searches for the most significant grouping for group Y and may determine that, for example, group Y1 including data groups 3 to i and group Y2 including data groups i to N have the most significant difference. Here, i is an integer equal to or greater than 3. Furthermore, the number of iterations of multistage grouping is not limited, but it is necessary that the number of pieces of training data contained in one group not be too small to avoid a reduction in the accuracy of the generated quality prediction model.

Here, for a plurality of explanatory variables, those with a P value less than or equal to a predetermined value (for example, 1/n where n is the total number of pieces of training data) may be considered important variables, and grouping may be performed using the important variables. Furthermore, only one of the important variables that can easily explain the relationship with product quality may be selected, or two or more important variables may be selected. When the accuracy of prediction using a quality prediction model generated in the past is acquired, the important variables may be selected taking that accuracy into consideration.

The generation unit 135 generates a quality prediction model by machine learning using a group according to the most significant grouping found by the search unit 134. The machine learning technique is not particularly limited, but may be, for example, linear regression, local regression, principal component regression, PLS regression, neural networks, regression trees, random forests, LightGBM, and XGBoost. In other words, the machine learning techniques that the generation unit 135 can use include at least linear regression, local regression, principal component regression, PLS regression, neural networks, regression trees, random forests, LightGBM, and XGBoost. For example, in the above example in which the calculation unit 133 and the search unit 134 perform multistage grouping, the generation unit 135 generates three quality prediction models using the training data of each of group X, group Y1, and group Y2. The generation unit 135 stores the generated quality prediction models in the memory 12, for example.

The prediction unit 136 uses the generated quality prediction model to predict the presence/absence of quality defects in a metal material manufactured under any manufacturing conditions. The prediction result is displayed on the display 30, for example. When a quality defect in the metal material is predicted, at least a portion of the manufacturing conditions is changed based on an instruction from the operator, so that the quality of the manufactured metal material improves.

To maintain the accuracy of prediction of the presence/absence of quality defects in the metal material, the prediction unit 136 may output an instruction to the calculation unit 133, the search unit 134, and the generation unit 135 to regenerate the quality prediction model for the metal material. That is, the prediction unit 136 may cause the calculation unit 133 to re-group the training data and re-test whether a significant difference exists in the state of quality defects. The prediction unit 136 may cause the search unit 134 to re-search for the most significant grouping and may output an instruction to the generation unit 135 to regenerate the quality prediction model by machine learning using a group according to the most significant grouping found. The prediction unit 136 may output a command to regenerate the quality prediction model for the metal material when, for example, the prediction accuracy of the presence/absence of quality defects in the metal material falls outside a predetermined range (is not within a predetermined range), or at predetermined intervals (for example, every three months). The quality prediction model may then be regenerated based on the command.

Based on the presence/absence of quality defects in the metal material as predicted by the prediction unit 136, the manufacturing condition presentation unit 137 searches for at least a portion of the manufacturing conditions for each process that will eliminate the quality defects in the prediction result and presents changes in the found manufacturing conditions via the display 30. The manufacturing condition presentation unit 137 changes at least a portion of the operable manufacturing conditions for each process from their current values to other values, leaves the other manufacturing conditions at their current values, and inputs the values as explanatory variables of the quality prediction model generated by the generation unit 135. The manufacturing condition presentation unit 137 then predicts the presence/absence of quality defects in the metal material. If the prediction result is "absent" for quality defects, the changed manufacturing conditions are presented on the display 30. If the prediction result is "present" for quality defects, the operable manufacturing condition values of each process are further changed to other values until the prediction result by the quality prediction model becomes "absent" for quality defects. For example, optimization methods such as an iterative method may be used. The manufacturing condition presentation unit 137 may use the quality prediction model generated by the generation unit 135 through machine learning to calculate the variable importance (feature importance) for the objective variable, which is the presence/absence of quality defects in the manufactured metal material. Then, based on the variable importance, the manufacturing condition presentation unit 137 may select, as the manufacturing condition to be changed, a manufacturing condition that has a high degree of contribution to the objective variable from among the manufacturing conditions of each process that are explanatory variables. The manufacturing condition presentation unit 137 may calculate the variable importance (feature importance) by applying mathematical methods such as SHAP (SHapley Additive exPlanations), Gini impurity, frequency, gain (amount of reduction in the objective function depending on whether the feature is used), or the like.

The quality prediction model generation apparatus 10 may also include an output unit 138 that outputs (transmits), via a network, the changes in the manufacturing conditions presented by the manufacturing condition presentation unit 137 to a control computer that controls the manufacturing apparatuses for each process of manufacturing the metal material. The control computer controls the manufacturing apparatuses for each process of manufacturing the metal material in accordance with the changes in manufacturing conditions that have been transmitted, and the quality prediction model generation apparatus 10 and the control computer may constitute a manufacturing system for a metal material. The control computer may also accept modifications to manufacturing conditions made by an operator and control the manufacturing apparatuses for each process.

The output unit 138 may display the changes in the manufacturing conditions presented by the manufacturing condition presentation unit 137 through a display device (for example, a liquid crystal display) connected over a network.

FIG. 2 is a flowchart illustrating processing of a method of generating a quality prediction model executed by the quality prediction model generation apparatus 10 according to the present embodiment. In the present embodiment, the quality prediction model generation apparatus 10 also functions as a quality prediction apparatus for a metal material and predicts the presence/absence of quality defects in the metal material. FIG. 2 is also a flowchart illustrating the processing of a method of predicting quality for a metal material. In the present embodiment, the quality prediction model generation apparatus 10 also functions as a manufacturing condition presentation apparatus for a metal material and presents changes in at least a portion of the manufacturing conditions for the metal material. FIG. 2 is also a flowchart illustrating the processing of a method of presenting manufacturing conditions for a metal material. In the present embodiment, the quality prediction model generation apparatus 10 constitutes a manufacturing system for a metal material together with a control computer that controls a manufacturing apparatus that manufactures a metal material. FIG. 2 is also a flowchart illustrating the processing of a method of manufacturing a metal material. Here, the prediction of the presence/absence of quality defects in the metal material (step S9), the regeneration of the quality prediction model (step S10), the presentation of manufacturing conditions for the metal material (step S11), and the manufacturing of the metal material (step S12) may be performed consecutively following the generation of the quality prediction model (step S8). Furthermore, steps S9 to S12 may be executed after a certain time has elapsed after the generation of the quality prediction model.

The acquisition unit 131 acquires manufacturing conditions and quality data from the performance database (step S1). Step S1 corresponds to the acquisition step.

The storage unit 132 eliminates multicollinearity from the data acquired by the acquisition unit 131 (step S2) and stores the explanatory variables and the objective variables in association with each other as training data (step S3). A known method may be used to eliminate multicollinearity. Also, step S2 may be omitted. Step S3 corresponds to a storage step.

When the explanatory variables used for grouping are acquired as categorical variables (Yes in step S4), the calculation unit 133 performs a numerical conversion such as one-hot encoding (step S5). When the explanatory variables used for grouping are acquired as numerical variables (No in step S4), the calculation unit 133 proceeds to the processing in step S6. The calculation unit 133 divides the training data into groups and performs a significance test (step S6). Steps S4 to S6 correspond to calculation steps.

The search unit 134 searches for the most significant grouping (step S7). Step S7 corresponds to a search step.

The generation unit 135 generates a quality prediction model for the groups according to the grouping that was found (step S8). Step S8 corresponds to a generation step.

The prediction unit 136 uses the generated quality prediction model to predict the presence/absence of quality defects in a metal material (step S9).

To maintain the accuracy of prediction of the presence/absence of quality defects in the metal material, the prediction unit 136 may output an instruction to regenerate the quality prediction model for the metal material (step S10). The prediction unit 136 may output a command to regenerate the quality prediction model for the metal material when, for example, the prediction accuracy of the presence/absence of quality defects in the metal material falls outside a predetermined range (is not within a predetermined range), or at predetermined intervals. When the quality prediction model of the metal material is to be regenerated (Yes in step S10), the processing returns to step S6. When the quality prediction model of the metal material is not to be regenerated (No in step S10), the processing proceeds to step S11.

Based on the predicted presence or absence of quality defects in the metal material, the manufacturing condition presentation unit 137 searches for at least a portion of the manufacturing conditions for each process that will result in a prediction result of "absent" for quality defects and presents changes to the found manufacturing conditions (step 11). The changes to the found manufacturing conditions are transmitted as a manufacturing condition change command via the output unit 138 to the control computer that controls the manufacturing apparatuses for each process of manufacturing the metal material, and the changes are displayed on the display 30.

Based on the changes to the found manufacturing conditions, the metal material is manufactured (step S12). The changes to the manufacturing conditions are transmitted to the control computer, and the metal material is manufactured in accordance with the transmitted changes to the manufacturing conditions. Based on the display on the display 30, the operator may set changes to the manufacturing conditions in the control computer.

The effects of the present disclosure will be described in detail below based on examples, but the present disclosure is not limited to these examples.

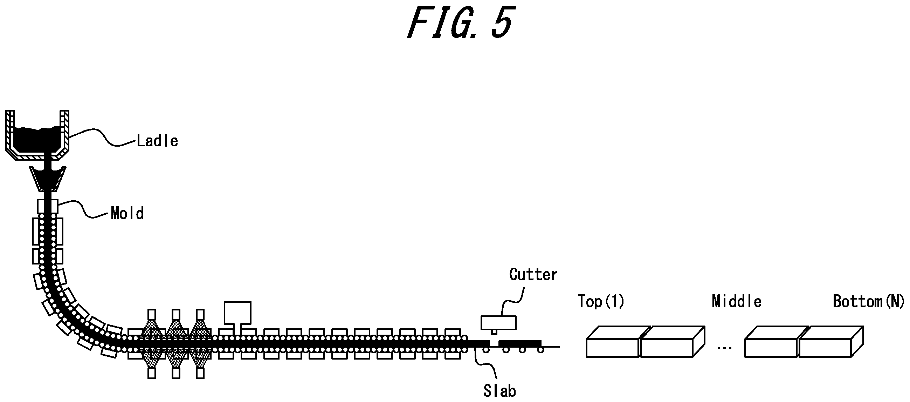

In the present example, the method of predicting quality for a metal material according to the above embodiment was applied to prediction of the presence/absence of defects in structural steel sheets. The structural steel sheets in the present example are manufactured from a slab, which is an intermediate product manufactured in the casting process (continuous casting process) illustrated in FIG. 5.

In the casting process illustrated in FIG. 5, molten steel in a ladle (molten steel vessel) is poured into a mold (casting mold) via a tundish. The molten steel in the mold undergoes primary cooling in the mold, solidifying from the surface to form a cast strand. The cast strand withdrawn from the mold is subject to secondary cooling by coolant below the mold and finally solidifies completely. The cast strand is then cut into slabs of a predetermined length by a cutter. The slabs are rolled in the next process, one slab at a time, and then processed further to become products. Here, for each molten steel vessel corresponding to the manufactured slab, numbers 1 to N are assigned from the top to the bottom in the cutting order to determine the slab cutting order.

The objective variable (quality) of quality prediction in the present embodiment is the presence or absence of defects determined by ultrasonic flaw detection of products (structural steel sheets, pressure-vessel steel, offshore structural steel). The explanatory variables (manufacturing conditions) include the chemical composition of the metal material in the smelting process. The explanatory variables include the temperature of the metal material in the casting process, the casting speed, the cooling conditions, and the slab cutting order. The explanatory variables also include the temperature of the metal material in the heating process, the temperature of the metal material in the hot rolling process, and the temperature of the metal material in the cooling process. The explanatory variables also include the temperature and cutting dimensions of the metal material in the cold rolling process.

As in the method of generating a quality prediction model according to the above embodiment, data was acquired from the performance database. A quality prediction model, which is a machine learning model, was then generated. As the machine learning method, LightGBM (Light Gradient Boosting Machine) was used. In addition, Fisher's exact test was used as the method for a significance test. An arbitrary division point for a continuous variable was determined by dividing the difference between the maximum and minimum values of the variable (maximum value - minimum value) into 25 equal parts to find the smallest P value, and the division point corresponding to the minimum P value was adopted as the division point for that variable.

Moreover, the slab cutting order is a kind of categorical variable. The data corresponding to cutting order 1 was categorized as data group 1, the data corresponding to cutting orders 2 to N - 1 as data groups 2 to N - 1, respectively, and the data corresponding to the last cutting order (N) as data group N. Each data group was classified by binarization using one-hot encoding. In the present example, the division into a first group including data groups 1 and 2, a second group including data groups N and N - 1, and a third group including the other data groups was determined to have the most significant difference.

A quality prediction model was generated for each of these groups using LightGBM. These quality prediction models were also used to predict the presence/absence of quality defects. Here, the number of samples in the performance database was 307, and the number of explanatory variables was 260. As a result of the prediction, the accuracy rate for "quality defects present" using this method was 89 %. In contrast, the accuracy rate for "quality defects present" using a conventional method was 68 %, and it was confirmed that the accuracy rate increased significantly. Here, the conventional method generates one quality prediction model using all the training data without performing grouping using a significance test.

As described above, the method of generating a quality prediction model, method of predicting quality for a metal material, method of manufacturing a metal material, quality prediction model generation apparatus 10, quality prediction apparatus for a metal material, and manufacturing system for a metal material according to the present embodiment perform appropriate grouping based on significant differences when generating a quality prediction model. Therefore, by using the generated quality prediction model, it becomes possible to make highly accurate predictions about the quality of metal materials.

In generating a model in the present embodiment, the operating conditions in each manufacturing process for products manufactured in the past and the quality of the products manufactured under those operating conditions are acquired as performance data, and the corresponding operating condition data and quality data are linked and stored. Then, a plurality of explanatory variables are grouped to identify the grouping that is most significant for the quality data. Traditionally, such grouping has not been performed. The technique of the present disclosure enables objective and meaningful grouping even if the operator does not have deep knowledge or sufficient experience of the manufacturing process. The grouping according to the method of the present disclosure classifies the manufacturing conditions and quality data by a significance test so as to correspond to changes in the quality of the metal material (so as to reflect factors that contribute to the quality). Therefore, a quality prediction model generated according to such grouping enables highly accurate prediction.

Furthermore, the method of presenting manufacturing conditions for a metal material and the manufacturing condition presentation apparatus for a metal material according to the present embodiment search for and present manufacturing conditions that will improve internal defects (defects detected by ultrasonic flaw detection) in structural steel sheets. In the present example, a quality prediction model generated using the aforementioned LightGBM was used. Of the operable manufacturing conditions in the refining process, casting process, heating process, hot rolling process, cooling process, and cold rolling process, the heating temperature in the heating process, which has a large gain in LightGBM and a high contribution to the presence/absence of internal defects, which is the target variable, was selected as the condition to be changed. Using the quality prediction model, the presence/absence of quality defects in the metal material was predicted, and the heating temperature yielding a prediction result of "absent" for quality defects was searched for using an iterative method (golden section search) within the range from the maximum value to the minimum value of the heating temperature acquired from the operation data server 20. The change in the found heating temperature of the heating process was set in the control computer, and the metal material was manufactured. As a result, the heating temperature increased by +30 °C on average, and the rate of quality defects was 9 %. The rate of quality defects before applying the method of presenting manufacturing conditions for a metal material according to the present embodiment (the conventional rate) was 10 %, thus confirming an improvement in the rate of quality defects.

While embodiments according to the present disclosure have been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each component, each step, or the like can be rearranged without logical inconsistency, and a plurality of components, steps, or the like can be combined into one or divided. Embodiments according to the present disclosure can also be realized as a program executed by a processor included in an apparatus or as a storage medium having the program recorded thereon. Such embodiments are also to be understood as included in the scope of the present disclosure.

Here, the quality prediction model generation apparatus 10 does not need to have the function of a quality prediction apparatus for a metal material, as described above. Specifically, a configuration may be adopted in which the quality prediction model generation apparatus 10 has only the function of generating a quality prediction model, and the prediction unit 136 is included in a quality prediction apparatus for a metal material, which is a computer (information processing apparatus) different from the quality prediction model generation apparatus 10. In this case, the quality prediction apparatus for a metal material acquires, over the network, the model generated by the quality prediction model generation apparatus 10 and stored in the memory 12 and predicts the presence/absence of quality defects in the metal material.

As another example, the display 30 may be included in the quality prediction model generation apparatus 10.

REFERENCE SIGNS LIST

| | |
|---|---|
| 10 | Quality prediction model generation apparatus (quality prediction apparatus for metal material) |
| 11 | Communication interface |
| 12 | Memory |
| 13 | Controller |
| 20 | Operation data server |
| 30 | Display |
| 131 | Acquisition unit |
| 132 | Storage unit |
| 133 | Calculation unit |
| 134 | Search unit |
| 135 | Generation unit |
| 136 | Prediction unit |
| 137 | Manufacturing condition presentation unit |
| 138 | Output unit |

**Claims**

1. A method of generating a quality prediction model for a metal material manufactured through one or more processes, the method comprising:

   acquiring an explanatory variable selected from manufacturing conditions of each process and an objective variable that is a state of quality defects in the manufactured metal material;
   storing the explanatory variable and the objective variable in association with each other as training data;
   calculating by dividing the training data into groups and testing whether a significant difference exists in the state of quality defects;
   searching for a most significant grouping; and
   generating the quality prediction model by machine learning using a group according to the most significant grouping found.

2. The method of generating a quality prediction model according to claim 1, wherein the explanatory variable is acquired as a numerical variable or a categorical variable.

3. The method of generating a quality prediction model according to claim 2, wherein when the explanatory variable is acquired as a categorical variable, the calculating includes performing a numerical conversion to classify the categorical variable by assigning different binary numerical values, and calculating an index evaluating the significant difference based on the assigned numerical values and the state of quality defects.

4. The method of generating a quality prediction model according to claim 3, wherein the calculating includes calculating the index for each of a plurality of groupings.

5. The method of generating a quality prediction model according to any one of claims 1 to 4, wherein after the searching, the calculating includes further grouping and testing one group among groups according to the most significant grouping found.

6. The method of generating a quality prediction model according to any one of claims 1 to 5, wherein techniques for the machine learning include at least linear regression, local regression, principal component regression, PLS regression, neural networks, regression trees, random forests, LightGBM, and XGBoost.

7. The method of generating a quality prediction model according to any one of claims 1 to 6, wherein the quality prediction model is regenerated when a prediction accuracy of the quality prediction model falls outside a predetermined range, or at predetermined intervals.

8. A method of predicting quality of a metal material comprises using a quality prediction model generated by the method of generating a quality prediction model according to any one of claims 1 to 7 to predict a state of quality defects in the metal material.

9. A method of manufacturing a metal material comprises:

   using the method of predicting quality of a metal material according to claim 8 to predict a state of quality defects of the metal material; and
   changing at least a portion of the manufacturing conditions when a quality defect in the metal material is predicted to exist.

10. A method of presenting manufacturing conditions for a metal material comprises using the method of predicting quality of a metal material according to claim 8 to predict a state of quality defects of the metal material, and when a quality defect of the metal material is predicted to exist, searching for and presenting a change to at least a portion of the manufacturing conditions that will eliminate the quality defect.

11. A method of manufacturing a metal material comprises manufacturing a metal material based on the change to the manufacturing conditions presented by the method of presenting manufacturing conditions for a metal material according to claim 10.

12. A quality prediction model generation apparatus for generating a quality prediction model for a metal material manufactured through one or more processes, comprising:

   an acquisition unit configured to acquire an explanatory variable selected from manufacturing conditions of each process and an objective variable that is a state of quality defects in the manufactured metal material;
   a storage unit configured to store the explanatory variable and the objective variable in association with each other as training data;
   a calculation unit configured to divide the training data into groups and test whether a significant difference exists in the state of quality defects;
   a search unit configured to search for a most significant grouping; and
   a generation unit configured to generate the quality prediction model by machine learning using a group according to the most significant grouping found.

13. A quality prediction apparatus for a metal material is configured to use a quality prediction model generated by the quality prediction model generation apparatus according to claim 12 to predict a state of quality defects in the metal material.

14. A manufacturing condition presentation apparatus for a metal material is configured to present a change to at least a portion of manufacturing conditions of a metal material based on presence or absence of quality defects in the metal material as predicted by the quality prediction apparatus for a metal material according to claim 13.

15. A manufacturing system for a metal material is configured to control a manufacturing apparatus for each process of manufacturing a metal material in accordance with the change to manufacturing conditions as output from an output unit of the manufacturing condition presentation apparatus for a metal material according to claim 14.

# FIG. 1

Operation data server 20

Performance database

→ Manufacturing conditions, quality data →

Quality prediction model generation apparatus (quality prediction apparatus for metal material) 10

Communication interface 11

Memory 12

Controller 13

Acquisition unit 131

Storage unit 132

Calculation unit 133

Search unit 134

Generation unit 135

Prediction unit 136

Manufacturing condition presentation unit 137

Output unit 138

→ Prediction result →

Display (terminal apparatus) 30

EP 4 769 249 A1

FIG. 2

```
                    ┌──────────────┐
                    │    Start     │
                    └──────┬───────┘
                           │
        ┌──────────────────▼──────────────────┐
        │ Acquire manufacturing conditions,   │
        │          quality data               │ ~S1
        └──────────────────┬──────────────────┘
                           │
        ┌──────────────────▼──────────────────┐
        │       Eliminate multicollinearity   │ ~S2
        └──────────────────┬──────────────────┘
                           │
        ┌──────────────────▼──────────────────┐
        │         Store as training data      │ ~S3
        └──────────────────┬──────────────────┘
                           │                        S4
  No    ◁──────────────────▼──────────────────▷
  ┌─────  Are the explanatory variables categorical variables?
  │                        │Yes
  │       ┌────────────────▼────────────────┐
  │       │    Perform numerical conversion │ ~S5
  │       └────────────────┬────────────────┘
  │                        │
  └────────────────────────┤
                           │
        ┌──────────────────▼──────────────────┐
        │     Divide training data into groups │
        │       and perform a significance test│ ~S6
        └──────────────────┬──────────────────┘
                           │
        ┌──────────────────▼──────────────────┐
        │   Search for the most significant    │
        │             grouping                 │ ~S7
        └──────────────────┬──────────────────┘
                           │
        ┌──────────────────▼──────────────────┐
        │  Generate a quality prediction model │
        │  for the groups according to the     │ ~S8
        │       grouping that was found        │
        └──────────────────┬──────────────────┘
                           │
        ┌──────────────────▼──────────────────┐
        │ Use the generated quality prediction │
        │ model to predict presence/absence of │ ~S9
        │ quality defects in a metal material  │
        └──────────────────┬──────────────────┘
                           │                     S10
  Yes   ◁──────────────────▼──────────────────▷
  ┌─────   Regenerate the quality prediction model?
  │                        │No
  │       ┌────────────────▼────────────────┐
  │       │ Present manufacturing conditions │ ~S11
  │       │      for the metal material      │
  │       └────────────────┬────────────────┘
  │                        │
  │       ┌────────────────▼────────────────┐
  │       │    Manufacture the metal material│ ~S12
  │       └────────────────┬────────────────┘
  │                        │
  │                 ┌───────▼──────┐
  │                 │     End      │
  │                 └──────────────┘
```

14

# FIG. 3

# FIG. 4

|  | Quality defects present | Quality defects absent |
|---|---|---|
| Group X | a | b |
| Group Y | c | d |

# FIG. 5

Ladle

Mold

Cutter

Slab

Top(1)    Middle    Bottom(N)

EP 4 769 249 A1

**INTERNATIONAL SEARCH REPORT**

| International application No. |
| --- |
| **PCT/JP2024/028755** |

**A. CLASSIFICATION OF SUBJECT MATTER**

*G06N 20/00*(2019.01)i; *G05B 19/418*(2006.01)i
FI:  G06N20/00 130; G05B19/418 Z

According to International Patent Classification (IPC) or to both national classification and IPC

**B. FIELDS SEARCHED**

Minimum documentation searched (classification system followed by classification symbols)

G06N20/00; G05B19/418

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-027683 A (NIPPON STEEL CORPORATION) 09 February 2012 (2012-02-09) entire text, all drawings | 1-15 |
| A | WO 2019/189249 A1 (NEC CORPORATION) 03 October 2019 (2019-10-03) entire text, all drawings | 1-15 |
| A | JP 2004-157814 A (FUJI ELECTRIC HOLDINGS CO., LTD.) 03 June 2004 (2004-06-03) entire text, all drawings | 1-15 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 September 2024** | **08 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

### INTERNATIONAL SEARCH REPORT
**Information on patent family members**

| International application No. |
| --- |
| **PCT/JP2024/028755** |

| Patent document cited in search report | | | Publication date (day/month/year) | Patent family member(s) | Publication date (day/month/year) |
| --- | --- | --- | --- | --- | --- |
| JP | 2012-027683 | A | 09 February 2012 | (Family: none) | |
| WO | 2019/189249 | A1 | 03 October 2019 | US 2021/0012214 A1 entire text, all drawings | |
| JP | 2004-157814 | A | 03 June 2004 | (Family: none) | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7207547 B